# EUROPÄISCHE PATENTSCHRIFT

(11) **EP 2 499 991 B1**
(45) Veröffentlichungstag und Bekanntmachung des Hinweises auf die Patenterteilung: **27.12.2017**
(21) Anmeldenummer: 12450015.8
(22) Anmeldetag: 12.03.2012
(51) Int. Cl.: A61C 9/00, G01B 11/25

(54) **Vorrichtung zum Aufnehmen von Bildern von dreidimensionalen Objekten**
Device for taking pictures of three-dimensional objects
Dispositif de capture d'images d'objets tridimensionnels

(30) Priorität: 18.03.2011 AT 3892011
(43) Veröffentlichungstag der Anmeldung: 19.09.2012
(73) Patentinhaber: a.tron3d GmbH, 9020 Klagenfurt am Wörthersee (AT)
(72) Erfinder: Zinner, Christian, 1220 Wien (AT); Koinig, Horst, 9020 Klagenfurt (AT); Jesenko, Jürgen, 9161 Maria Rain (AT)
(74) Vertreter: Beer & Partner Patentanwälte KG

(56) Entgegenhaltungen:
- EP-A2- 1 901 031
- US-A- 5 832 107
- US-A- 6 122 042
- US-A1- 2010 073 461

## Beschreibung

Die Erfindung betrifft eine Vorrichtung zum Aufnehmen von Bildern von dreidimensionalen Objekten gemäß dem Oberbegriff der Ansprüche 1 und 2.

Eine solche Vorrichtung ist beispielsweise aus der US 2010/0073461 A1 bekannt.

Derartige Vorrichtungen werden insbesondere im Bereich der dreidimensionalen Aufnahme von Zähnen verwendet. Der Anwendungsbereich erstreckt sich dabei auf die Aufnahme von digitalen Zahn- und Kieferabdrücken, die Hilfestellung bei der Diagnose, die Überwachung von Zahnbehandlungen sowie die zuverlässige Kontrolle von eingesetzten Implantaten. Neben weiteren Einsatzgebieten im Bereich der Medizin- und Industrietechnik, beispielsweise im Bereich der Endoskopie, können generell Objekte stereometrisch vermessen werden, die schwer zugänglich sind.

Probleme bestehen hierbei zum einen in der erforderlichen Miniaturisierung der Projektions- und Aufnahmeeinheit und zum anderen in den hohen Anforderungen an die Qualität der Aufnahmen. Insbesondere im Bereich der Zahnheilkunde sind oft Abmessungen von etwa 0,1-0,2mm relevant, sodass eine Auflösung von im Bereich von etwa 0,01-0,04mm erforderlich ist, um sämtliche Details der abzubildenden Gegenstände mit hinreichender Auflösung zu erfassen.

Aus dem Stand der Technik sind bereits Vorrichtungen zum Vermessen von Zähnen bekannt, die dreidimensionale Bilder liefern. Ein wesentlicher Nachteil dieser Vorrichtungen ist, dass die Aufnahmegeräte (handgeführte Scanner), die zu den abzubildenden Gegenständen vordringen, meist unhandlich, sperrig und geometrisch nicht für die effiziente Führung im Mund des Patienten geformt sind, da mitunter eine Menge unterschiedlicher Komponenten im Aufnahmebereich erforderlich ist.

Aufgabe der Erfindung ist es daher, eine Vorrichtung zur Verfügung zu stellen, die eine zuverlässige Aufnahme auch schwer zugänglicher Objekte, wie Zähne, ermöglicht.

Gelöst wird diese Aufgabe durch eine Vorrichtung mit den Merkmalen des Anspruchs 1 sowie eine Vorrichtung mit den Merkmalen des Anspruchs 2.

Durch die beiden Spiegel, welche Licht von der Lichtquelle aus unterschiedlichen Richtungen auf das Objekt reflektieren, wird eine bessere Beleuchtung der Objekte ermöglicht bzw. eine einseitige, schräge Beleuchtung des Bildfeldes am Objekt bzw. Zahn, das unter Umständen z.B. in einem Kantenbereich vom Objekt selbst oder benachbarten Objekten partiell abgeschattet wird, weitgehend vermieden, wodurch Bereiche, wie z.B. am letzten Backenzahn, auch an der Rückseite gut ausgeleuchtet und aufgenommen bzw. in weiterer Folge vermessen werden können.

Eine besonders gute Ausleuchtung des Objektes für eine Bildaufnahme ist dann möglich, wenn, von der Lichtquelle aus betrachtet, ein erster Spiegel hinter einem Objektiv der Kamera und ein zweiter Spiegel vor dem Objektiv liegt. Auf diese Weise wird das Objekt von zwei bezüglich der Kamera gegenüber liegenden Seiten beleuchtet, sodass eine Beschattung des Bildfeldes am Objekt zuverlässig vermieden werden kann.

Wenn eine dreidimensionale Bildaufnahme und in weiterer Folge Vermessung eines Objektes erfolgen soll, ist bei der Erfindung bevorzugt, wenn zwei Kameras vorgesehen sind, welche Bilder aus unterschiedlichen Richtungen aufnehmen. Aus dem Stand der Technik, beispielsweise der AT 508 563 B, sind bereits eine Vorrichtung und ein Verfahren zum Vermessen von Objekten wie Zähnen bekannt, welche dreidimensionale Bilder liefern. Diese aber auch andere bekannte Vorrichtungen und Verfahren können bei der vorliegenden Erfindung zum Einsatz kommen, um dreidimensionale Bilder zu erzeugen.

Dementsprechend kann die Lichtquelle bei der Erfindung ein nach einem Zufallsprinzip angeordnetes Muster auf das Objekt projizieren. Dies hat den Vorteil, dass man nicht auf zufällig vorhandene, von der Kamera und der Bildauswertung erfassbare Unregelmäßigkeiten am Objekt angewiesen ist, um das Objekt zu vermessen.

Weiters können bei der Erfindung zwei Kameras vorgesehen sein, welche Bilder aus unterschiedlichen Richtungen aufnehmen, wobei bevorzugt ist, wenn die Kameras, von der Lichtquelle aus betrachtet, nebeneinander liegen.

Wenn bei einer Ausführungsform der Erfindung die optischen Achsen der Spiegel in einer Ebene liegen und die Objektive der Kameras symmetrisch zu der Ebene liegen, in denen die optischen Achsen der Spiegel liegen, dann ist durch diese symmetrische Anordnung eine besonders zuverlässige Ausleuchtung bzw. Musterprojektion und Bildaufnahme möglich, die zu sehr präzisen dreidimensionalen Bildern führt, da bei der Vermessung von Kantenbereichen (z.B. Schneidezähne) keine Fehlstellen in den Punktwolken auf dem Objekt entstehen, welche die Aufnahme und Registrierung der Geometrie des Objekts in diesem Bereich erschweren oder unmöglich machen würde. Außerdem ermöglicht diese Anordnung eine sehr kompakte, insbesondere schlanke Bauweise.

Um ein nach einem Zufallsprinzip angeordnetes Muster auf das Objekt zu projizieren kann in einer bevorzugten Ausführungsform der Erfindung im Strahlengang der Lichtquelle ein transparenter Träger mit dem Muster angeordnet sein, wobei weiters bevorzugt ist, wenn das Muster im Wesentlichen aus zufällig verteilten, gegebenenfalls unregelmäßig geformten, Punkten und/oder Linien besteht.

Weitere bevorzugte Ausführungsformen der Erfindung sind Gegenstand der übrigen Unteransprüche.

Weitere Merkmale und Vorteile der Erfindung ergeben sich aus der nachfolgenden Beschreibung bevorzugter Ausführungsbeispiele der Erfindung unter Bezugnahme auf die angeschlossenen Zeichnungen.

Es zeigt:
- Fig. 1: eine Ausführungsform eines Handstücks für die Erfindung von der Seite,
- Fig. 2: das Handstück von Fig. 1 in Draufsicht,
- Fig. 3: das Handstück von Fig. 1 von vorne
- Fig. 4: das Handstück der Fig. 1 bis 3 im Schrägriss,
- Fig. 5: eine teilweise Explosionsdarstellung einer Ausführungsform der Erfindung,
- Fig. 6: einen Längsschnitt durch die Ausführungsform von Fig. 5,
- Fig. 7: ein Detail von Fig. 6,
- Fig. 8: einen Schnitt durch die Vorrichtung entlang der Linie VIII-VIII und
- Fig. 9: ein Detail einer Ausführungsform eines Projektors.

In den Zeichnungen ist eine bevorzugte Ausführungsform einer Vorrichtung 1 zur dreidimensionalen Aufnahme von Objekten 10, insbesondere Zähnen dargestellt, die einen Aufnahmebereich 2 und einen Griffbereich 3 aufweist. Zwischen Aufnahmebereich 2 und Griffbereich 3 ist im dargestellten Ausführungsbeispiel ein Mittelbereich 5 angeordnet. Da der Mittelbereich 5 kleinere Außenabmaße aufweist als der Aufnahmebereich 2, weist der Aufnahmebereich 2 einen im Wesentlichen konischen Übergangsbereich 6 zum Mittelbereich 5 hin auf. Am vorderen Ende 4 ist der Aufnahmebereich 2 abgerundet.

Der Aufnahmebereich 2 weist eine Mittelachse 7 auf, der Griffbereich 3 der Mittelachse 8 und der Mittelbereich 5 eine Mittelachse 9. Der Winkel α zwischen der Mittelachse 7 und der Mittelachse 8 liegt erfindungsgemäß zwischen 10° und 40°, wobei sich dieser Winkel α im dargestellten Ausführungsbeispiel (mit einem Mittelbereich 5) in zwei Winkel β und γ aufteilt, wobei der Winkel β zwischen der Mittelachse 7 des Aufnahmeteils 2 und der Mittelachse 9 des Mittelbereichs 5 liegt und der Winkel γ zwischen der Mittelachse 9 des Mittelbereichs 5 und der Mittelachse 8 des Griffteils 3 liegt. Der Winkel β liegt bevorzugt zwischen 3° und 15° und der Winkel γ zwischen 7° und 25°. Die Länge des Aufnahmebereichs liegt bevorzugt zwischen 10 und 60 mm, da innerhalb dieser Grenzen sowohl eine gute Handhabbarkeit des Handstücks 1 als auch ausreichend Raum zum Unterbringen der Projektions- und/oder Aufnahmetechnik vorhanden ist.

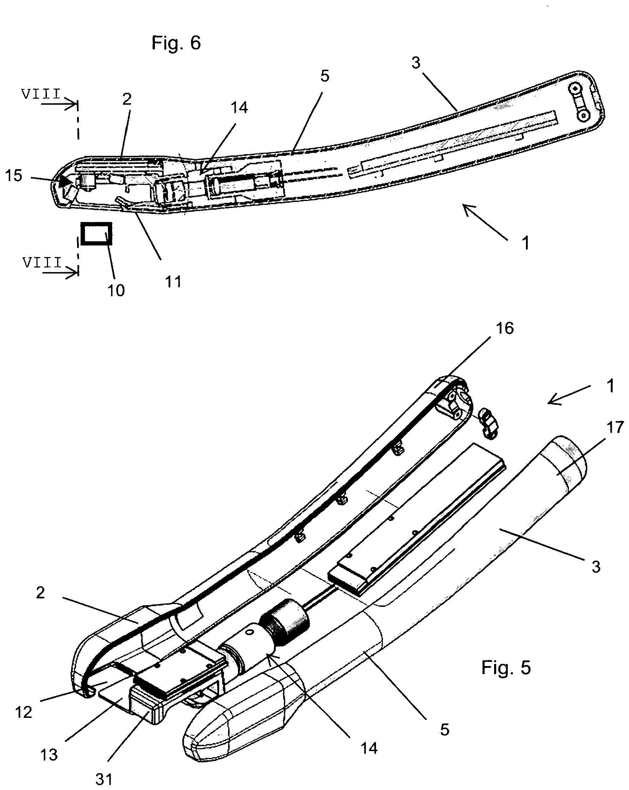

An seiner dem aufzunehmendem Objekt 10 zugewandten Seite 11 ist im Aufnahmeteil 2 eine Öffnung 12 (Fig. 5) angeordnet, die von einer Scheibe 13 verschlossen ist. Durch diese Scheibe 13 können mit einem Projektor 14 Licht, insbesondere ein Zufallsmuster, auf das Objekt 10 gerichtet und mit einem Kamerasystem 15 Bilder des Objektes 10 aufgenommen werden. Der Aufnahmebereich 2 ist somit gegenüber dem Griffbereich 3 um einen Winkel α zwischen 10° und 40° entgegen der Projektionsrichtung nach hinten geneigt.

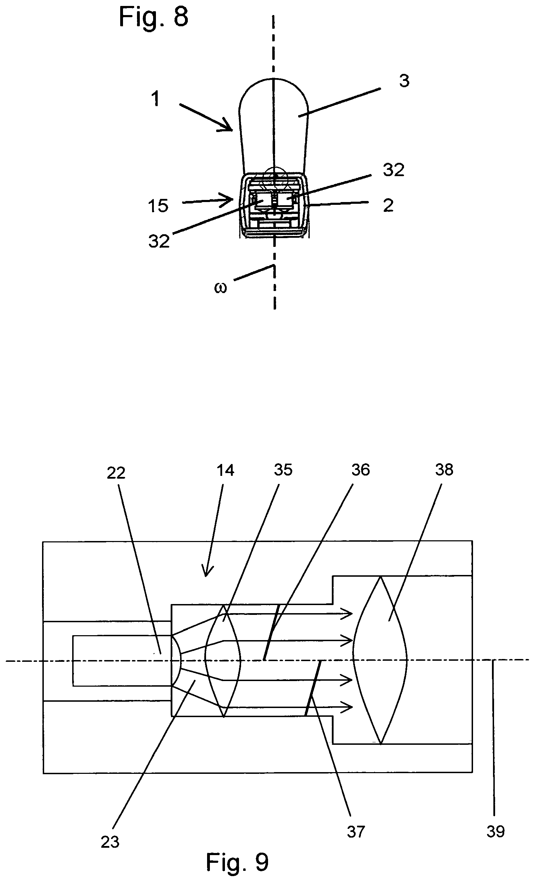

In den Fig. 5 bis 8 ist eine Ausführungsform der Erfindung dargestellt, bei welcher der Projektor 14 mit einer Lichtquelle ein Lichtbündel 23 abstrahlt. Das Lichtbündel 23 tritt durch einen oder mehrere in Fig. 9 dargestellte transparente Träger 36, 37, beispielsweise Dias, auf denen ein nach einem Zufallsprinzip angeordnetes Muster angeordnet ist. Das Muster besteht bevorzugt aus im Wesentlichen zufällig verteilten, gegebenenfalls unregelmäßig geformten Punkten und/oder Linien, die in weiterer Folge auf das Objekt 10, beispielsweise einen Zahn, projiziert werden.

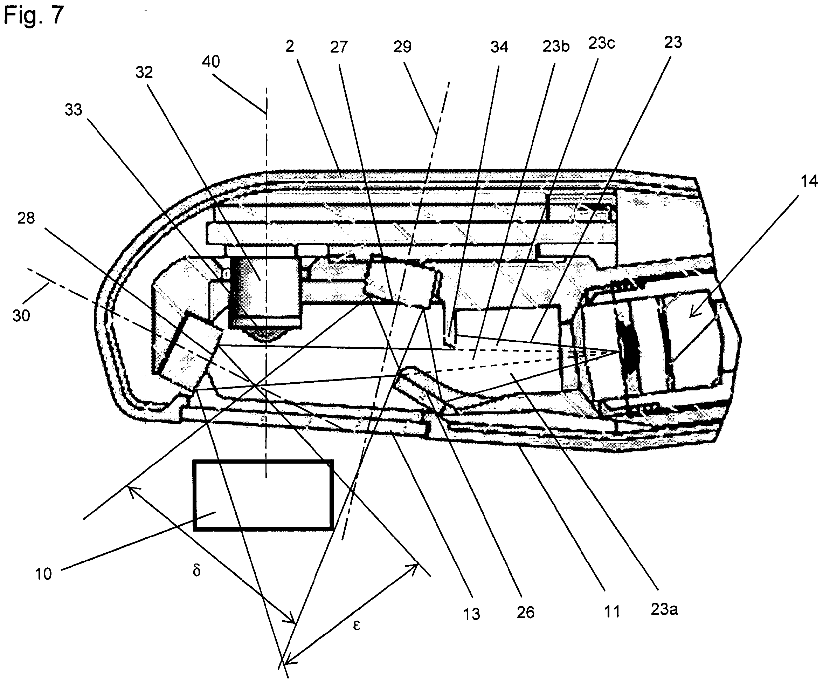

Im Strahlengang des Lichtbündels 23 liegt ein Umlenkspiegel 26, der einen Teil 23a des Lichtbündels 23, im Ausführungsbeispiel von Fig. 7 den untersten Teil, auf einen ersten Spiegel 27 umlenkt, der in weiterer Folge das Licht auf das Objekt 10 richtet. Ein weiterer Teil 23b des Lichtbündels 23, im Ausführungsbeispiel von Fig. 7 der mittlere Teil, trifft direkt auf einen zweiten Spiegel 28, von dem das Licht ebenfalls auf das Objekt 10 gerichtet wird.

Der Umlenkspiegel 26 ist bevorzugt ein ebener Spiegel, könnte bei Bedarf aber auch ein konvex oder konkav gekrümmter Spiegel sein. Die beiden Spiegel 27 und 28 sind bevorzugt zweiachsig konvex gekrümmte Spiegel mit gleichen oder unterschiedlichen Krümmungsradien in den beiden Achsen, mit denen der jeweilige Anteil des Strahlenbündels 23 je nach Bedarf stärker gestreut werden kann.

Im dargestellten Ausführungsbeispiel ist die Anordnung und Krümmung des Umlenkspiegels 26 und des ersten Spiegels 27 so gewählt, dass der Teil 23a des Lichtbündels 23 in der Bildebene der Zeichnung einen Öffnungswinkel δ von etwa 30° hat. Die Anordnung und Krümmung des zweiten Spiegels 28 ist beispielhaft so gewählt, dass der Teil 23b des Lichtbündels 23 in der Bildebene der Zeichnung einen Öffnungswinkel ε von etwa 25° hat. Der Öffnungswinkel der Teile 23a, 23b des Lichtbündels 23 in Richtung normal zur Bildebene der Zeichnung kann durch geeignete Krümmung der Spiegel 27, 28 je nach Anforderung gleich oder unterschiedlich zum jeweiligen in der Bildebene liegenden Öffnungswinkel δ, ε sein.

Durch die in Fig. 7 beispielhaft gewählte Anordnung der Spiegel 27, 28 sind deren optische Achsen 29, 30 so zueinander geneigt, dass die Lichtbündelteile 23a, 23b aus unterschiedlichen Richtungen auf des Objekt 10 treffen.

In Projektionsrichtung des Projektors 14 gesehen zwischen den beiden Spiegeln 27, 28, im dargestellten Ausführungsbeispiel etwas näher dem zweiten Spiegel 28, ist ein Kamerasystem 15 angeordnet, das im dargestellten Ausführungsbeispiel aus zwei Kameras 32 besteht, welche stereoskopische Bilder zur dreidimensionalen Vermessung des Objektes 10 aufnehmen, indem sie mit einander überschneidenden Aufnahmebereichen Bilder aus unterschiedlichen Richtungen aufnehmen. Die beiden optischen Achsen 29, 30 der Spiegel 27, 28 spannen eine Ebene ω auf, wobei die beiden Kameras 32, genauer gesagt deren Objektive 33, symmetrisch zu beiden Seiten dieser Ebene ω liegen.

Durch diese bevorzugte Anordnung liegt das Kamerasystem 15 mit den Spiegeln 26, 27 bzw. deren optischen Achsen 29, 30 in einer Ebene ω, was eine sehr präzise Bildaufnahme und damit Vermessung des Objekts ermöglicht. Durch die Projektion der Lichtbündelteile 23a, 23b durch Spiegel 26, 27, die zu beiden Seiten des Kamerasystems 15 liegen, erfolgt auch eine Ausleuchtung bzw. Projektion des Zufallsmusters auf das Objekt 10 von zwei Seiten in dieser Ebene ω, wodurch - aus Sicht des Kamerasystems 15 betrachtet - Schatten oder Fehlstellen auf dem Objekt 10, die beispielsweise bei Backenzähnen oder Schneidezähnen auftreten können, sehr zuverlässig vermieden werden können.

Grundsätzlich wäre es ebenso möglich, die Spiegel - vom Projektor 14 aus betrachtet - neben den beiden Kameras 32 zu positionieren und gegebenenfalls die beiden Kameras 32 um 90° zu drehen, sodass sie beide in die Ebene ω liegen. Es sind auch mehr als zwei Spiegel, sowohl vor und/oder hinter als auch seitlich der Kameras 32 denkbar, um eine möglichst gute Ausleuchtung bzw. Musterprojektion auf dem Objekt 10 zu erhalten.

Im dargestellten Ausführungsbeispiel ist im Bereich über dem Umlenkspiegel 26 eine Blende 34 angeordnet, die einen dritten Teil 23c des Lichtbündels 23 blockiert, damit dieser keine unerwünschten Reflexionen in der Optik 33 der Kameras 32 verursacht. Je nach Anordnung der Spiegel 26, 27, 28 und der Objektive 33 kann die Blende 34 auch weg gelassen oder anders angeordnet oder geformt sein.

Alle Spiegel 26, 27, 28, die Blende 34 sowie gegebenenfalls auch das Kamerasystem 15 können einstellbar an entsprechenden Halterungen 31 befestigt sein, damit bei Bedarf eine einfache Einstellung und/oder Kalibrierung der einzelnen Komponenten möglich ist. Außerdem können alle oder auch nur ein Teil der vorstehend beschriebenen Komponenten auf einem Trägersystem befestigt und voreingestellt sein, das anschließend in ein Aufnahmegerät eingesetzt werden kann. Das Gehäuse der Vorrichtung 1 besteht vorzugsweise aus zwei Gehäusehälften 16, 17, die spiegelsymmetrisch ausgeführt sind, wodurch die Vorrichtung sehr einfach zusammen gebaut werden kann.

Durch die gewählte und in der Zeichnung beispielhaft dargestellte erfindungsgemäße Anordnung ist eine sehr kompakte und schlanke Bauweise möglich, welche beispielsweise sehr gut in ein Handstück zur dreidimensionalen Aufnahme von Zähnen integriert werden kann.

Bevorzugt kommt die in Verbindung mit den Fig. 5 bis 8 beschriebene Anordnung der Spiegel und Kameras bei Handstücken mit einem abgewinkelten Aufnahmebereich 2 und ggf. Mittelbereich 5 zum Einsatz, da durch die Spiegel 26, 27, 28 eine besonders gute Möglichkeit geboten wird, die gesamte Projektions- und Aufnahmetechnik in ein abgewinkeltes Handstück 1 einzubauen, das sehr schlank ist und durch den Knick insbesondere bei Oralscannern besonders gut handhabbar ist.

Bei der erfindungsgemäßen Vorrichtung kann direkt ab der Außenfläche des Scannerglases 13 bereits ein optimaler Schärfegrad ohne das Risiko von Schatten oder Fehlstellen erreicht werden, um auch bei Auflage des Scanners auf einem Objekt, z.B. einem Zahn, dieses bereits vermessen werden kann, wogegen bekannte Scanner häufig in einem bestimmten Abstand zu den Zähnen gehalten werden müssen, was den Aufnahmeprozess, im Vergleich zur erfindungsgemäßen Möglichkeit auch direkt auf die Zähne auflegen zu können, signifikant erschwert.

In Fig. 9 ist schematisch eine Ausführungsform der Erfindung dargestellt, bei der zwei transparente Träger 36, 37, beispielsweise zwei Dias, auf denen nach einem Zufallsprinzip angeordnete Muster angeordnet sind, im Strahlengang eines Lichtbündels 23 liegen, das von einer Lichtquelle 22, beispielsweise einer LED ausgestrahlt wird. Das Muster kann im Wesentlichen aus zufällig verteilten, gegebenenfalls unregelmäßig geformten, Punkten und/oder Linien bestehen. Das Licht geht in der dargestellten Ausführungsform zuerst durch eine Linse 35, dann durch die beiden Träger 36, 37, und in weiterer Folge durch ein symbolisch durch eine Linse 38 dargestelltes weiteres Linsensystem, das zur Ausrichtung des Projektionsstrahles 23 und zur Schärfeneinstellung dient.

Der Projektor 14 von Fig. 9 kann beispielsweise bei einer in den Fig. 5 bis 8 dargestellten Vorrichtung eingesetzt werden, bei der das Lichtbündel 23 über zwei Spiegel 27 und 28 auf ein Objekt 10 gerichtet wird. Da das Licht unterschiedlich lange Wege zurücklegt, je nach dem ob es entweder über den Umlenkspiegel 26 und den Spiegel 27 oder über den Spiegel 28 auf das Objekt 10 trifft, können bei der Projektion des auf einem Träger vorhandenen Musters auf das Objekt 10 Unschärfen der einen oder anderen oder beider Projektionen entstehen.

Durch die Verwendung von zwei Trägern 36, 37 kann darauf Rücksicht genommen und können Unschärfen individuell ausgeglichen werden. Dies kann beispielsweise dadurch erfolgen, dass die beiden Träger 36, 37 in Ausbreitungsrichtung des Lichts zueinander versetzt sind. Damit liegt z.B. der Träger 36, der im Strahlengang des Lichtbündels 23b des Spiegels 28 liegt, weiter hinten bzw. weiter von der Linse 38 bzw. einem nachfolgenden Linsensystem entfernt als der Träger 37, der im Strahlengang des Lichtbündels 23a des Spiegels 27 liegt, sodass insgesamt der Weg des Lichts vom jeweiligen Träger 36, 37 über den/die jeweiligen Spiegel 26, 27, 28 bis zum Objekt 10 wieder ungefähr gleich lang ist. Maßgeblich sind die unterschiedlichen Abstände der Träger 36, 37 zum Linsensystem 38, da diese Abstände die Position und Lage der Schärfeebene im Messraum bestimmen. Wenn die Wegdifferenz über den/die jeweiligen Spiegel 26, 27, 28 bis zum Objekt 10 nicht sehr groß ist, könnte beispielsweise auch nur ein einziger Träger verwendet werden, der entweder stufenweise abgesetzte Abschnitte aufweist oder der zwar eben aber entsprechend stark geneigt ist, um die Wegdifferenz im Mittel zu kompensieren.

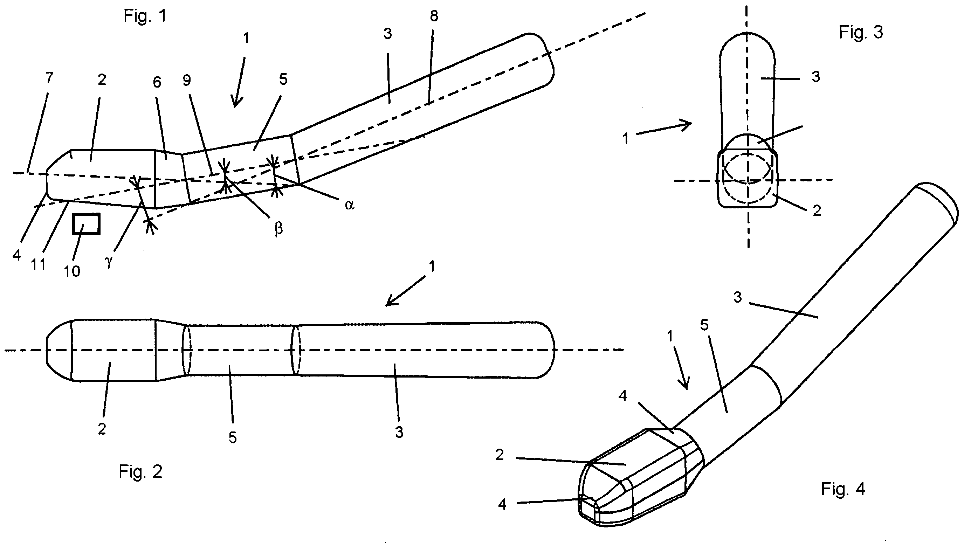

In Fig. 9 ist eine Schrägstellung der Träger 36, 37 zur Ausbreitungsrichtung des Lichts zu sehen, d.h. dass die Träger 36, 37 nicht exakt im rechten Winkel zu Ausbreitungsrichtung des Lichts liegen. Diese Ausführungsform der Erfindung ist dann von Vorteil, wenn der Projektor 14 bzw. dessen optische Mittelachse 39 wie in der in den Fig. 1 bis 8 dargestellten Ausführungsform in einem Winkel β größer 0° zum Aufnahmebereich 2 ausgerichtet ist, insbesondere die optische Mittelachse 39 nicht im rechten Winkel zur optischen Mittelachse 40 der Kameras 32 ausgerichtet ist. Die Anordnung des Projektors 14 im abgewinkelten Übergangsbereich zwischen dem Aufnahmebereich 2, in dem sich die Kameras 32 befinden, und dem Mittelbereich 5 ist besonders vorteilhaft, da auf diese Weise der Aufnahmebereich 2 relativ kurz gehalten werden kann, was die Handhabung des Handstücks 1 wesentlich verbessert. Durch die Schrägstellung der Träger 36, 37 können durch die Schrägstellung des Projektors 14 verursachte Unschärfen des auf des Objekt 10 projizierten Musters ausgeglichen werden.

## Patentansprüche

1. Vorrichtung zum Aufnehmen von Bildern von dreidimensionalen Objekten (10), insbesondere Zähnen, mit einer Lichtquelle (22) und einer Kamera (32) zum Aufnehmen von Bildern des Objektes (10), mit wenigstens zwei Spiegeln (27, 28), welche Licht von der Lichtquelle (22) aus unterschiedlichen Richtungen auf das Objekt (10) reflektieren, wobei die Lichtquelle (22) ein nach einem Zufallsprinzip angeordnetes Muster auf das Objekt (10) projiziert, **dadurch gekennzeichnet, dass** im Strahlengang der Lichtquelle (22) wenigstens ein transparenter Träger (36, 37) mit dem Muster angeordnet ist und dass der Träger (36, 37) Abschnitte mit dem Muster aufweist, die in Richtung des Strahlengangs zueinander versetzt sind.

2. Vorrichtung zum Aufnehmen von Bildern von dreidimensionalen Objekten (10), insbesondere Zähnen, mit einer Lichtquelle (22) und einer Kamera (32) zum Aufnehmen von Bildern des Objektes (10), mit wenigstens zwei Spiegeln (27, 28), welche Licht von der Lichtquelle (22) aus unterschiedlichen Richtungen auf das Objekt (10) reflektieren, wobei die Lichtquelle (22) ein nach einem Zufallsprinzip angeordnetes Muster auf das Objekt (10) projiziert, **dadurch gekennzeichnet, dass** im Strahlengang der Lichtquelle (22) wenigstens zwei transparente Träger (36, 37) mit dem Muster angeordnet sind und dass die Träger (36, 37) in Richtung des Strahlengangs zueinander versetzt sind.

3. Vorrichtung nach Anspruch 1 oder 2, **dadurch gekennzeichnet, dass** die Spiegel (27, 28) unterschiedlich ausgerichtete optische Achsen (29, 30) aufweisen.

4. Vorrichtung nach einem der Ansprüche 1 bis 3, **dadurch gekennzeichnet, dass** wenigstens ein Spiegel (26, 27), vorzugsweise zwei Spiegel, einachsig oder mehrachsig konvex gekrümmt ist.

5. Vorrichtung nach einem der Ansprüche 1 bis 4, **dadurch gekennzeichnet, dass** ein erster Spiegel (27) indirekt über einen Umlenkspiegel (26) und ein zweiter Spiegel (28) direkt von der Lichtquelle (22) beschienen wird.

6. Vorrichtung nach Anspruch 5, **dadurch gekennzeichnet, dass** der Umlenkspiegel (26) ein ebener Spiegel ist.

7. Vorrichtung nach einem der Ansprüche 1 bis 6, **dadurch gekennzeichnet, dass** das Lichtbündel (23) der Lichtquelle (22) wenigstens teilweise von einer Blende (34) begrenzt wird.

8. Vorrichtung nach einem der Ansprüche 1 bis 7, **dadurch gekennzeichnet, dass** zwei Spiegel (27, 28) auf unterschiedlichen Seiten der Kamera (32) liegen.

9. Vorrichtung nach Anspruch 8, **dadurch gekennzeichnet, dass**, von der Lichtquelle (22) aus betrachtet, ein erster Spiegel (27) vor einem Objektiv (33) der Kamera (32) und ein zweiter Spiegel (28) hinter dem Objektiv (33) liegt.

10. Vorrichtung nach einem der Ansprüche 1 bis 9, **gekennzeichnet durch** zwei Kameras (32) mit einander überschneidenden Aufnahmebereichen, welche Bilder aus unterschiedlichen Richtungen aufnehmen.

11. Vorrichtung nach Anspruch 10, **dadurch gekennzeichnet, dass** die Objektive (33) der Kameras (32), von der Lichtquelle (22) aus betrachtet, nebeneinander liegen.

12. Vorrichtung nach einem der Ansprüche 1 bis 11, **dadurch gekennzeichnet, dass** die optischen Achsen (29, 30) der Spiegel (27, 28) in einer Ebene (ω) liegen.

13. Vorrichtung nach Anspruch 11 und 12, **dadurch gekennzeichnet, dass** die Objektive (33) der Kameras (32) symmetrisch zu der Ebene liegen, in denen die optischen Achsen (29, 30) der Spiegel (27, 28) liegen.

14. Vorrichtung nach einem der Ansprüche 1 bis 13, **dadurch gekennzeichnet, dass** das Muster im Wesentlichen aus zufällig verteilten, gegebenenfalls unregelmäßig geformten, Punkten und/oder Linien besteht.

15. Vorrichtung nach einem der Ansprüche 2 bis 14, **dadurch gekennzeichnet, dass** wenigstens ein Träger (36, 37) Abschnitte aufweist, die in Richtung des Strahlengangs zueinander versetzt sind.

16. Vorrichtung nach einem der Ansprüche 1 bis 15, **dadurch gekennzeichnet, dass** wenigstens ein Träger (36, 37) mit Bezug zur Ausbreitungsrichtung des Lichts in einem Winkel ungleich 90° geneigt ist.

17. Vorrichtung nach einem der Ansprüche 1 bis 16, mit einem Aufnahmebereich (2), in dem die Spiegel (26, 27, 28) angeordnet sind, und mit einem Griffbereich (3), **dadurch gekennzeichnet, dass** die Kamera (32) und/oder die Lichtquelle (22) im Aufnahmebereich (2) angeordnet ist/sind und dass der Aufnahmebereich (2) entgegen der Projektionsrichtung um einen Winkel (α) zwischen 10° und 40° gegenüber dem Griffbereich (3) geneigt ist.

## Claims

1. A device for recording images of three-dimensional objects (10), in particular teeth, having a light source (22) and a camera (32) for recording images of the object (10), having at least two mirrors (27, 28) which reflect light from the light source (22) from different directions onto the object (20), wherein the light source (22) projects a pattern arranged according to a random principle onto the object (10), **characterized in that** at least one transparent carrier (36, 37) with the pattern is arranged in the beam path of the light source (22), and that the carrier (36, 37) has sections with the pattern which are offset with respect to each other in the direction of the beam path.

2. A device for recording images of three-dimensional objects (10), in particular teeth, having a light source (22) and a camera (32) for recording images of the object (10), having at least two mirrors (27, 28) which reflect light from the light source (22) from different directions onto the object (10), wherein the light source (22) projects a pattern arranged according to a random principle onto the object (10), **characterized in that** at least two transparent carriers (36, 37) with the pattern are arranged in the beam path of the light source (22), and that the carriers (36, 37) are offset with respect to each other in the direction of the beam path.

3. A device according to claim 1 or 2, **characterized in that** the mirrors (27, 28) have differently oriented optical axes (29, 30).

4. A device according to one of the claims 1 to 3, **characterized in that** at least one mirror (26, 27), preferably two mirrors, is convexly curved uniaxially or multi-axially.

5. A device according to one of the claims 1 to 4, **characterized in that** a first mirror (27) is illuminated indirectly via a deflecting mirror (26) and a second mirror (28) directly by the light source (22).

6. A device according to claim 5, **characterized in that** the deflecting mirror (26) is a plane mirror.

7. A device according to one of the claims 1 to 6, **characterized in that** the light bundle (23) of the light source (22) is at least partially delimited by a diaphragm (34).

8. A device according to one of the claims 1 to 7, **characterized in that** two mirrors (27, 28) lie on different sides of the camera (32).

9. A device according to claim 8, **characterized in that**, as viewed from the light source (22), a first mirror (27) lies in front of a lens (33) of the camera (32) and a second mirror (28) behind the lens (33).

10. A device according to one of the claims 1 to 9, **characterized by** two cameras (32) with mutually overlapping recording regions which record images from different directions.

11. A device according to claim 10, **characterized in that** the lenses (33) of the cameras (32) are arranged next to one another, as viewed from the light source (22).

12. A device according to one of the claims 1 to 11, **characterized in that** the optical axes (29, 30) of the mirrors (27, 28) lie in one plane (ω).

13. A device according to claim 11 and 12, **characterized in that** the lenses (33) of the cameras (32) lie symmetrically with respect to the plane in which the optical axes (29, 30) of the mirror (27, 28) are disposed.

14. A device according to one of the claims 1 to 13, **characterized in that** the pattern consists essentially of randomly distributed, optionally irregularly shaped, points and/or lines.

15. A device according to one of the claims 2 to 14, **characterized in that** at least one carrier (36, 37) comprises sections which are offset from one another in the direction of the beam path.

16. A device according to one of the claims 1 to 15, **characterized in that** at least one carrier (36, 37) is inclined at an angle other than 90° with respect to the propagation direction of the light.

17. A device according to one of the claims 1 to 16, comprising a recording area (2) in which the mirrors (26, 27, 28) are arranged, and a grip area (3), **characterized in that** the camera (32) and/or the light source (22) is/are arranged in the recording area (2), and the recording area (2) is inclined against the projection direction by an angle (α) between 10° and 40° relative to the grip area (3).

## Revendications

1. Dispositif de capture d'images d'objets tridimensionnels (10), en particulier de dents, comprenant une source de lumière (22) et une caméra (32) pour capturer des images de l'objet (10), au moins deux miroirs (27, 28) qui réfléchissent la lumière de la source de lumière (22) provenant de différentes directions sur l'objet (10), dans lequel la source de lumière (22) projette sur l'objet (10) un motif disposé de façon aléatoire, **caractérisé en ce qu'**au moins un support transparent (36, 37) muni du motif est disposé dans le chemin optique de la source de lumière (22) et que le support (36, 37) présente des parties munies du motif qui sont décalées l'une par rapport à l'autre dans la direction du chemin optique.

2. Dispositif de capture d'images d'objets tridimensionnels (10), en particulier de dents, comprenant une source de lumière (22) et une caméra (32) pour capturer des images de l'objet (10), au moins deux miroirs (27, 28) qui réfléchissent la lumière de la source de lumière (22) provenant de différentes directions sur l'objet (10), dans lequel la source de lumière (22) projette sur l'objet (10) un motif disposé de façon aléatoire, **caractérisé en ce qu'**au moins deux supports transparents (36, 37) munis du motif sont disposés dans le chemin optique de la source de lumière (22) et que les supports (36, 37) sont décalés l'un par rapport à l'autre dans la direction du chemin optique.

3. Dispositif selon la revendication 1 ou 2, **caractérisé en ce que** les miroirs (27, 28) présentent des axes optiques (29, 30) d'orientation différente.

4. Dispositif selon l'une des revendications 1 à 3, **caractérisé en ce qu'**au moins un miroir (26, 27), de préférence deux miroirs, présentent une courbure convexe selon un ou plusieurs axes.

5. Dispositif selon l'une des revendications 1 à 4, **caractérisé en ce qu'**un premier miroir (27) est éclairé indirectement par l'intermédiaire d'un miroir de renvoi (26) et un deuxième miroir (28) directement par la source de lumière (22).

6. Dispositif selon la revendication 5, **caractérisé en ce que** le miroir de renvoi (26) est un miroir plan.

7. Dispositif selon l'une des revendications 1 à 6, **caractérisé en ce que** le faisceau lumineux (23) de la source de lumière (22) est limité au moins partiellement par un diaphragme (34).

8. Dispositif selon l'une des revendications 1 à 7, **caractérisé en ce que** deux miroirs (27, 28) sont situés sur des côtés différents de la caméra (32).

9. Dispositif selon la revendication 8, **caractérisé en ce que**, vu de la source de lumière (22), un premier miroir (27) est situé devant un objectif (33) de la caméra (32) et un deuxième miroir (28) derrière l'objectif (33).

10. Dispositif selon l'une des revendications 1 à 9, **caractérisé par** deux caméras (32) avec des zones de capture qui se chevauchent, lesquelles capturent des images depuis des directions différentes.

11. Dispositif selon la revendication 10, **caractérisé en ce que**, vu de la source de lumière (22), les objectifs (33) des caméras (32) sont situés l'un à côté de l'autre.

12. Dispositif selon l'une des revendications 1 à 11, **caractérisé en ce que** les axes optiques (29, 30) des miroirs (27, 28) sont situés dans un plan (ω).

13. Dispositif selon les revendications 11 et 12, **caractérisé en ce que** les objectifs (33) des caméras (32) sont situés symétriquement par rapport au plan dans lequel les axes optiques (29, 30) des miroirs (27, 28) sont situés.

14. Dispositif selon l'une des revendications 1 à 13, **caractérisé en ce que** le motif se compose essentiellement de points et/ou de lignes distribués aléatoirement, le cas échéant de forme irrégulière.

15. Dispositif selon l'une des revendications 2 à 14, **caractérisé en ce qu'**au moins un support (36, 37) présente des parties qui sont décalées l'une par rapport à l'autre dans la direction du chemin optique.

16. Dispositif selon l'une des revendications 1 à 15, **caractérisé en ce qu'**au moins un support (36, 37) est incliné d'un angle différent de 90° par rapport à la direction de propagation de la lumière.

17. Dispositif selon l'une des revendications 1 à 16, comprenant une zone de logement (2) dans laquelle les miroirs (26, 27, 28) sont disposés et une zone de préhension (3), **caractérisé en ce que** la caméra (32) et/ou la source de lumière (22) est/sont disposée(s) dans la zone de logement (2) et que la zone de logement (2) est inclinée à l'encontre de la direction de projection d'un angle (α) compris entre 10° et 40° par rapport à la zone de préhension (3).
